# EUROPEAN PATENT SPECIFICATION

(11) **EP 2 818 673 B1**
(45) Date of publication and mention of the grant of the patent: **21.12.2016**
(21) Application number: 12870328.7
(22) Date of filing: 24.10.2012
(51) Int. Cl.: F02D 19/06, F02D 41/04, F02M 37/00, F02M 59/44

(54) **APPARATUS AND METHOD FOR SUPPLYING FUEL TO BI-FUEL ENGINE**
VORRICHTUNG UND VERFAHREN FÜR DIE ZUFUHR VON BRENNSTOFF ZU EINEM BI-FUEL-MOTOR
APPAREIL ET PROCÉDÉ D'ALIMENTATION EN COMBUSTIBLE D'UN MOTEUR MIXTE

(43) Date of publication of application: 31.12.2014
(73) Proprietor: Kefico Corporation, Gyeonggi-do 435-716 (KR)
(72) Inventor: REW, Seung Hyun, Uiwang-si Gyeonggi-do 437-080 (KR); JEON, Byung Chun, Changwon-si Gyeongsangnam-do 641-315 (KR)
(74) Representative: Zimmermann, Tankred Klaus
(86) International application number: PCT/KR2012/008772
(87) International publication number: WO 2014/065447

(56) References cited:
- EP-A1- 1 043 488
- WO-A1-2008/141390
- WO-A1-2011/059316
- WO-A1-2011/162682
- JP-A- 2005 083 320
- JP-B2- 2 578 423
- KR-A- 20100 128 319
- KR-A- 20110 079 550
- KR-A- 20120 074 505
- KR-A- 20130 031 744
- US-A1- 2009 229 572

## Description

### TECHNICAL FIELD

The present invention relates to an apparatus and method for supplying fuels of a bi-fuel engine, whereby a supply pressure of a liquid fuel is increased by using a high pressure of a liquefied gas fuel so that the liquid fuel can be smoothly supplied to the bi-fuel engine.

### BACKGROUND ART

Engines using two types of fuels include bi-fuel engines, such as combinations gasoline-liquefied petroleum gas (LPG) or combinations gasoline-compressed natural gas (CNG).

Vehicles equipped with bi-fuel engines include a fuel supplying apparatus in which fuel is converted to be supplied to a bi-fuel engine according to driver's manipulation or control of a control unit that diagnoses a status of a vehicle.

As an example of a fuel supplying apparatus, Korean Patent Laid-open Publication No. 10-2010-0128319 discloses an 'apparatus for directly spraying two types of fuels for an internal-combustion engine.

The apparatus disclosed in the above-published patent includes at least two fuel storage tanks for storing a first liquefied gas fuel and a second liquid fuel and two fuel pipes that are connected from the fuel storage tanks to an entrance of a high-pressure pump so as to supply two types of fuels to the high-pressure pump. The apparatus further includes a cleaning unit for cleaning the fuel pipes connected to the high-pressure pump, and check valves are disposed at the fuel pipes.

The fuel supplying apparatus according to the related art is configured so that the fuel pipes that are connected from the fuel storage tanks to the engine have a junction. A control unit controls the fuel supplying apparatus to convert the fuels to be supplied to the engine by controlling opening/closing of the fuel pipes. In this case, the converted and supplied fuels are supplied to the engine via the junction.

The liquefied gas fuel and the liquid fuel are two types of fuels, and the former has a much higher supply pressure than that of the latter. Thus, a pressure difference between a pipe to which the liquefied gas fuel is supplied and a pipe to which the liquid fuel is supplied, is very large.

Thus, when the liquefied gas fuel is converted into the liquid fuel and is supplied to the engine, the liquid fuel to be supplied via the junction should push the high-pressure liquefied gas fuel that remains in the pipe including the junction, so as to be supplied to the engine.

However, since an internal pressure of the pipe in which the liquefied gas fuel remains, is higher than the pressure of the liquid fuel to be supplied, the pressure of the liquid fuel should be increased to be higher than the pressure of the liquefied gas fuel, so as to be supplied to the engine.

Of course, an additional device may be disposed so as to increase the supply pressure of the liquefied fuel; however, it is difficult to handle a pressure change of the liquefied gas fuel with a variable pressure by using a structure in which the liquid fuel is supplied at a constant pressure.

WO 2008/141390 A1 describes a high vapour pressure liquid fuel (eg LPG) injection system keeps the fuel liquid at all expected operating temperatures by use of a high pressures pump capable of at least 2.5 MPa pressures. The fuel can be injected directly into the cylinder or into the inlet manifold of an engine via axial or bottom feed injectors and also could be mixed with a low vapour pressure fuel (eg diesel) to be injected similarly. The fuel, mixed or unmixed, can be stored in an accumulator under high pressure assisting in keeping the engine running during fuel changeovers and injection after a period of time as in re-starting the engine. The same injectors can be used to inject any of the fuels or mixtures of them.

US 2009/229572 A1 describes a high pressure common rail fuel system is provided including a fuel supply, a high pressure pump assembly fluidly connected to receive fuel from the fuel supply, and a gas supply system fluidly connected to provide gas to the high pressure pump assembly to create a high pressure gas fuel mixture. A common rail fuel system is fluidly connected to the high pressure pump assembly to receive the high pressure gas fuel mixture.

### DETAILED DESCRIPTION OF THE INVENTION

### TECHNICAL PROBLEM

The present invention provides an apparatus and method for supplying fuels of a bi-fuel engine, whereby a supply pressure of a liquid fuel is increased to be higher than the pressure of a liquefied gas fuel that remains in a fuel supply flow passage, by using a high pressure of the liquefied gas fuel supplied to a liquefied gas fuel supply flow passage when a liquefied gas fuel supply mode is converted into a liquid fuel supply mode so that the liquid fuel can be smoothly supplied to the bi-fuel engine.

### TECHNICAL SOLUTION

According to an aspect of the present invention, there is provided an apparatus for supplying fuels of a bi-fuel engine, including: a fuel supply flow passage that is connected to an engine; a liquefied gas fuel supply flow passage that is connected to the fuel supply flow passage and allows a liquefied gas fuel to be supplied from a liquefied gas fuel tank to the fuel supply flow passage; a liquid fuel supply flow passage that is connected to the fuel supply flow passage and allows a liquid fuel to be supplied from a liquid fuel tank to the fuel supply flow passage; a fuel selection valve that allows the liquefied gas fuel supply flow passage or the liquid fuel supply flow passage to be selectively open; a first chamber which is connected to the liquid fuel supply flow passage and in which the liquid fuel supplied to the liquid fuel supply flow passage is stored; and a pressurizing unit that operates so that a volume of an internal space of the first chamber is reduced and that pressurizes the liquid fuel stored in the first chamber, wherein the pressurizing unit operates due to a pressure of the liquefied gas fuel supplied to the liquefied gas fuel supply flow passage.

The pressurizing unit may include a first piston that is disposed to be able to make a reciprocal motion within the first chamber and pressurizes the liquid fuel stored in the first chamber as the first piston is moved in a first direction of reciprocal motion directions and a second piston that is disposed to be able to make a reciprocal motion within a second chamber, is connected by a piston rod to the first piston and makes a reciprocal motion together with the first piston as one body, and the second piston may be moved in the first direction or may make a reciprocal motion due to a pressure of the liquefied gas fuel supplied from the liquefied gas fuel supply flow passage into the second chamber.

A division flow passage that is connected to the second chamber from the liquefied gas fuel supply flow passage may be formed on the liquefied gas fuel supply flow passage, and the liquefied gas fuel supplied to the liquefied gas fuel supply flow passage may be supplied into the second chamber via the division flow passage.

An internal space of the second chamber may be partitioned by the second piston into a first space and a second space, and a first division flow passage that is connected to the first space from the liquefied gas fuel supply flow passage and a second division flow passage that is connected to the second space from the liquefied gas fuel supply flow passage may be formed on the liquefied gas fuel supply flow passage, and the liquefied gas fuel supplied to the liquefied gas fuel supply flow passage may be supplied to the first space and the second space via the first division flow passage and the second division flow passage, and the second piston may make a reciprocal motion within the second chamber due to a pressure difference between the first space and the second space.

A first ejection flow passage that is connected to an outside from the first space so that the liquefied gas fuel supplied to the first space is ejected to the outside and a second ejection flow passage that is connected to the outside from the second space so that the liquefied gas fuel supplied to the second space is ejected to the outside may be formed on the second chamber, and the first ejection flow passage may be open or closed by a first control valve, and the second ejection flow passage may be open or closed by a second control valve, and a pressure difference between the first space and the second space may occur due to selective opening/closing the first ejection flow passage or the second ejection flow passage.

The liquefied gas fuel ejected via the first ejection flow passage and the second ejection flow passage may be returned to a liquefied gas fuel tank via a liquefied gas fuel return flow passage.

A cross-section of the first chamber may be smaller than a cross-section of the second chamber.

The apparatus may further include an elastic body that provides an elastic force to the second piston in a second direction that is opposite to the first direction.

According to another aspect of the present invention, there is provided a method for supplying fuels of a bi-fuel engine by using the apparatus, the method including: (a) the fuel selection valve opening the liquefied gas fuel supply flow passage and closing the liquid fuel supply flow passage to supply a liquefied gas fuel to the fuel supply flow passage; (b) supplying a liquid fuel to the liquid fuel supply flow passage, simultaneously opening the first ejection flow passage and closing the second ejection flow passage and allowing the second piston to be moved in a second direction of reciprocal motion directions due to a pressure of the second space so that the liquid fuel is filled in the first chamber; (c) closing the first ejection flow passage, opening the second ejection flow passage, and allowing the second piston to be moved in the first direction due to a pressure of the first space so that the liquid fuel in the first chamber is pressurized by the first piston; and (d) the fuel selection valve closing the liquefied gas fuel supply flow passage and opening the liquid fuel supply flow passage to supply the liquid fuel to the fuel supply flow passage.

### DESCRIPTION OF THE DRAWINGS

FIG. 1 is a schematic view of an apparatus for supplying fuels of a bi-fuel engine, according to an embodiment of the present invention;
FIG. 2 is a schematic view illustrating a state where fuel supply is converted from a liquefied gas fuel to a liquid fuel by using the apparatus illustrated in FIG. 1; and
FIG. 3 is a schematic view of an operation of preparing to pressurize the liquid fuel by using the apparatus of FIG. 1.

### BEST MODE OF THE INVENTION

Hereinafter, an apparatus for supplying fuels of a bi-fuel engine according to the present invention will be described in detail by explaining an embodiment of the invention with reference to the attached drawings.

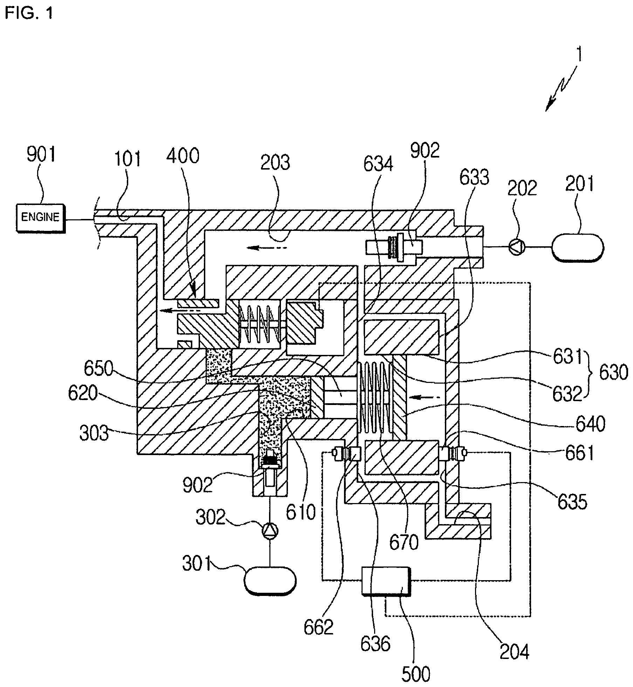

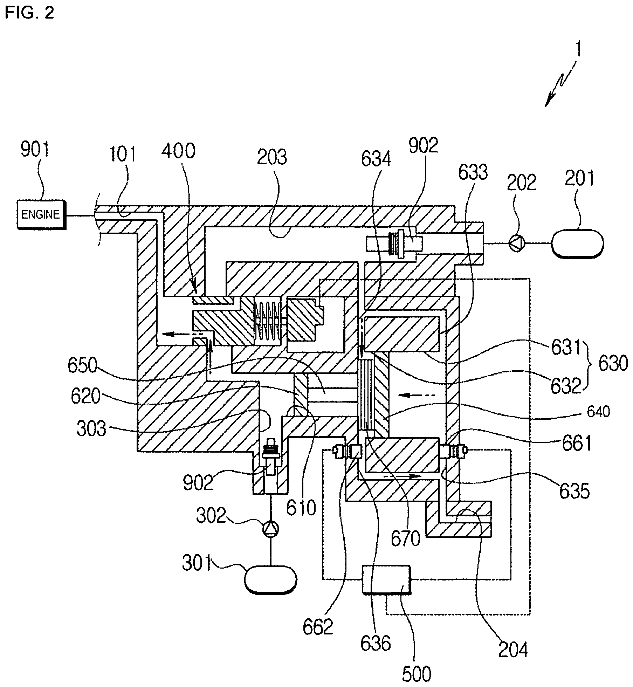

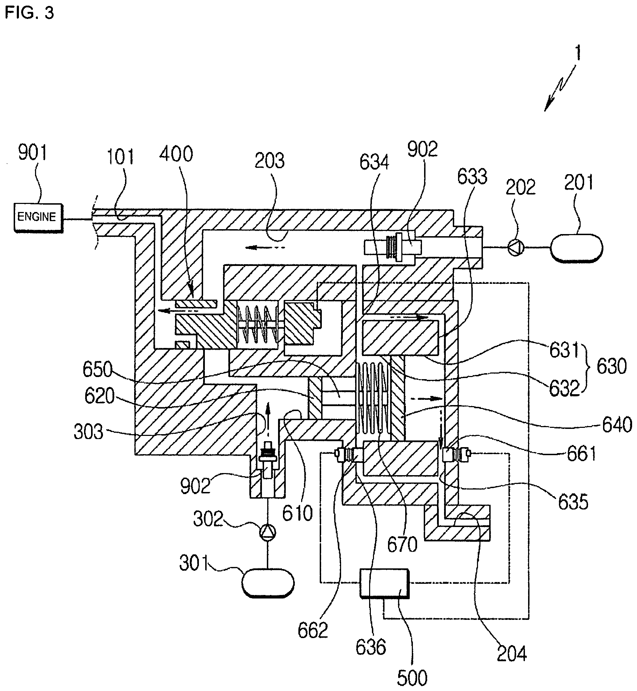

FIG. 1 is a schematic view of an apparatus 1 for supplying fuels of a bi-fuel engine, according to an embodiment of the present invention, FIG. 2 is a schematic view illustrating a state where fuel supply is converted from a liquefied gas fuel to a liquid fuel by using the apparatus 1 illustrated in FIG. 1, and FIG. 3 is a schematic view of an operation of preparing to pressurize the liquid fuel by using the apparatus 1 of FIG. 1.

As illustrated in FIGS. 1 through 3, the apparatus 1 for supplying fuels of a bi-fuel engine according to the current embodiment of the present invention includes a fuel supply flow passage 101 that is connected to an engine 901, a liquefied gas fuel supply flow passage 203 that is connected to the fuel supply flow passage 101 and allows a liquefied gas fuel to be supplied from a liquefied gas fuel tank 201 to the fuel supply flow passage 101, a liquid fuel supply flow passage 303 that is connected to the fuel supply flow passage 101 and allows a liquid fuel to be supplied from a liquid fuel tank 301 to the fuel supply flow passage 101, a fuel selection valve 400 that allows the liquefied gas fuel supply flow passage 203 or the liquid fuel supply flow passage 303 to be selectively open, a first chamber 610 which is connected to the liquid fuel supply flow passage 303 and in which the liquid fuel supplied to the liquid fuel supply flow passage 303 is stored, and a pressurizing unit that operates so that a volume of an internal space of the first chamber 610 can be reduced and that pressurizes the liquid fuel stored in the first chamber 610.

The fuel supply flow passage 101 is connected to the engine 910. In detail, the fuel supply flow passage 101 may be connected to a fuel rail (not shown) of the engine 901. A pressure adjusting unit (not shown) may be interposed between the fuel supply flow passage 101 and the fuel rail (not shown) in order to adjust the pressure of fuel supplied via the fuel supply flow passage 101 to a required pressure. The fuel that passes through the pressure adjusting unit (not shown) may be supplied by a fuel supply pump (not shown) to the fuel rail.

The fuel supply flow passage 101 is connected to the liquefied gas fuel supply flow passage 203 and the liquid fuel supply flow passage 303 so that one of the liquefied gas fuel and the liquid fuel can be supplied to the fuel supply flow passage 101.

The liquefied gas fuel supply flow passage 203 is connected to the liquefied gas fuel tank 201. The liquefied gas fuel is stored in the liquefied gas fuel tank 201, and the stored fuel may be supplied by a first pump 202 to the liquefied gas fuel supply flow passage 203 at a high pressure.

The liquid fuel supply flow passage 303 is connected to the liquid fuel tank 301. The liquid fuel stored in the liquid fuel tank 301 may be supplied by a second pump 302 to the liquid fuel supply flow passage 303 at a high pressure.

A check valve 902 may be disposed at each of the liquefied gas fuel supply flow passage 203 and the liquid fuel supply flow passage 303, so as to prevent fuels supplied from the liquefied gas fuel tank 201 and the liquid fuel tank 301 from flowing backward.

The fuel selection valve 400 allows the liquefied gas fuel supply flow passage 203 or the liquid fuel supply flow passage 303 to be selectively open to the fuel supply flow passage 101. The fuel selection valve 400 may be controlled by a control unit 500.

The fuel selection valve 400 may be configured as one solenoid valve, as illustrated in FIGS. 1 through 3. Alternatively, although not shown, the fuel selection valve 400 may be configured as two valves that are disposed on the liquefied gas fuel supply flow passage 203 and the liquid fuel supply flow passage 303.

FIG. 1 illustrates an operating state of the fuel selection valve 400 in a liquefied gas fuel supply mode. The fuel selection valve 400 illustrated in FIG. 1 is in a position where the liquid fuel supply flow passage 303 is closed towards the fuel supply flow passage 101 and simultaneously, the liquefied gas fuel supply flow passage 203 is open to the fuel supply flow passage 101.

FIG. 2 illustrates an operating state of the fuel selection valve 400 in a liquid fuel supply mode. The fuel selection valve 400 illustrated in FIG. 2 is in a position where the liquefied gas fuel supply flow passage 203 is closed towards the fuel supply flow passage 101 and simultaneously, the liquid fuel supply flow passage 303 is open to the fuel supply flow passage 101.

The pressure of the liquefied gas fuel supplied to the liquefied gas fuel supply flow passage 203 is much higher than the pressure of the liquid fuel supplied to the liquid fuel supply flow passage 303. This is because the pressurized liquid fuel has a non-compression property compared to the liquefied gas fuel.

Thus, when the fuel supply mode is converted from the liquefied gas fuel supply mode to the liquid fuel supply mode, the pressure of the liquid fuel should be increased to be higher than the pressure of the liquefied gas fuel that remains in the fuel supply flow passage 101 so as to be smoothly supplied to the engine 901 via the fuel supply flow passage 101.

To this end, in the present embodiment, a pressurizing unit for pressurizing the liquid fuel supplied to the liquid fuel supply flow passage 303 is disposed.

First, the first chamber 610 may be formed on the liquid fuel supply flow passage 303. In detail, the first chamber 610 may be connected to the liquid fuel supply flow passage 303, and the liquid fuel supplied to the liquid fuel supply flow passage 303 may be filled in the internal space of the first chamber 610 and may be stored therein.

The pressurizing unit operates to pressurize the liquid fuel stored in the first chamber 610. In detail, the pressurizing unit operates so that a volume of the internal space of the first chamber 610 can be reduced, and pressurizes the liquid fuel in the first chamber 610.

As a specific example, the pressurizing unit may include a first piston 620 that is disposed to be able to make a reciprocal motion within the first chamber 610 and pressurizes the liquid fuel stored in the first chamber 610 as the first piston 620 is moved in a first direction of reciprocal motion directions and a second piston 640 that is disposed to be able to make a reciprocal motion within a second chamber 630, is connected by a piston rod 650 to the first piston 620 and makes a reciprocal motion together with the first piston 620 as one body.

The first piston 620 is disposed to be able to make a reciprocal motion within the first chamber 610. The first piston 620 pressurizes the liquid fuel in the first chamber 610 while being moved in a first direction of reciprocal motion directions, i.e., to the left based on FIG. 1. The first position 620 is moved in a second direction that is opposite to the first direction, i.e., to the right based on FIG. 1, so that a space in which the liquid fuel is to be filled, can be formed in the first chamber 610.

The second piston 640 is disposed to be able to make a reciprocal motion within the second chamber 630 that may be adjacent to the first chamber 610. The first piston 620 and the second piston 640 are connected by the piston rod 650 to each other, and the second piston 640 makes a reciprocal motion as one body with the first piston 620.

The above-described operation of the pressurizing unit, i.e., the operation of the pressurizing unit so that the volume of the internal space of the first chamber 610 can be reduced, refers to an operation of the pressurizing unit so that the first piston 620 can moved in the first direction, in view of the specific example of the above-described pressurizing unit. The movement of the first piston 620 is performed by the first direction movement of the second piston 640 that is connected to the first piston 620 as one body.

In the present embodiment, the operation of the pressurizing unit is performed by the pressure of the liquefied gas fuel supplied to the liquefied gas fuel supply flow passage 203. In detail, in the present embodiment, the liquefied gas fuel supplied to the liquefied gas fuel supply flow passage 203 is supplied into the second chamber 630 so that the second piston 640 can be moved in the first direction by the pressure of the supplied liquefied gas fuel.

An example of a detailed structure in which the second piston 640 is moved in the first direction by the pressure of the liquefied gas fuel supplied to the liquefied gas fuel supply flow passage 203, will be represented below.

First, the internal space of the second chamber 630 is partitioned by the second piston 640 into a first space 631 and a second space 632.

A division flow passage (hereinafter, referred to as a 'first division flow passage') 633 that is connected to the first space 631 from the liquefied gas fuel supply flow passage 203, may be formed on the liquefied gas fuel supply flow passage 203.

The liquefied gas fuel supplied to the liquefied gas fuel supply flow passage 203 may be supplied into the second chamber 630, i.e., to the first space 631 via the first division flow passage 633. The second piston 640 is moved in a first direction, i.e., to the left based on the drawings due to the pressure of the liquefied gas fuel supplied to the first space 631. As the second piston 640 is moved, the first piston 620 is moved in the first direction, and due to the movement of the first piston 620, the liquid fuel filled in the first chamber 610 may be pressurized.

In this case, in order to allow the liquid fuel in the first chamber 610 to be pressurized at a higher pressure than a predetermined pressure of the first space 631 in which the second piston 640 is moved in the first direction, the cross-section of the first chamber 610 may be smaller than that of the second chamber 630. Here, the cross-section refers to a longitudinal cross-section based on the drawings.

This means that the area of the first piston 620 is smaller than that of the second piston 640.

The cross-section of the first chamber 610 being smaller than that of the second chamber 630 means that the cross-section of a region of the first chamber 610 pressurized by the first piston 620 is smaller than that of a region of the second chamber 630 to which the pressure of the first space 631 is applied. Thus, pressure applied to the liquid fuel in the first chamber 610 may be further increased due to the predetermined pressure of the first space 631.

The movement of the second piston 640 in the first direction and its movement in the second direction that is opposite to the first direction may be performed due to the pressure of the liquefied gas fuel.

To this end, a second division flow passage 634 that is connected to the second space 632 from the liquefied gas fuel supply flow passage 203 may be formed on the liquefied gas fuel supply flow passage 203. The liquefied gas fuel supplied to the liquefied gas fuel supply flow passage 203 may be supplied to the second space 203 via the second division flow passage 634.

In this case, the liquefied gas fuel is supplied to the first space 631 and the second space 632 via the first division flow passage 633 and the second division flow passage 634, respectively. In this case, if there is no pressure difference between the first space 631 and the second space 632, the movement of the second piston 640 may be limited.

Thus, the pressure of the first space 631 and the pressure of the second space 632 may be different from each other so that the second piston 640 can be moved in both directions within the second chamber 630 due to the pressure of the liquefied gas fuel supplied into the second chamber 630.

Various structures for making the pressure of the first space 631 and the pressure of the second space 632 different from each other may be represented. The present embodiment is a specific example of these structures in which a first ejection flow passage 635 and a second ejection flow passage 636 are formed on the second chamber 630.

The first ejection flow passage 635 is formed to be connected to the outside from the first space 631, and the second ejection flow passage 636 is formed to be connected to the outside from the second space 632. The liquefied gas fuel supplied to the first space 631 may be ejected to the outside from the first space 631 via the first ejection flow passage 635, and the liquefied gas fuel supplied to the second space 632 may be ejected to the outside from the second space 632 via the second ejection flow passage 636.

The pressure of the first space 631 and the pressure of the second space 632 are increased when the liquefied gas fuel is supplied to the first space 631 and the second space 632 via the first division flow passage 633 and the second division flow passage 634, respectively. The liquefied gas fuel is ejected via the first ejection flow passage 635 and the second ejection flow passage 636 so that the pressure of the first space 631 and the pressure of the second space 632 can be decreased.

Thus, the first ejection flow passage 635 or the second ejection flow passage 636 is selectively open or closed so that the pressure of one of the first space 631 and the second space 632 may be larger or small than the pressure of the other one. The first ejection flow passage 635 and the second ejection flow passage 636 are controlled in this way so that the second piston 640 can be moved in a required direction.

In order to control the apparatus 1 to selectively open/close the first ejection flow passage 635 or the second ejection flow passage 636, a first control valve 661 for opening/closing the first ejection flow passage 635 may be disposed on the first ejection flow passage 635, and a second control valve 662 for opening/closing the second ejection flow passage 636 may be disposed on the second ejection flow passage 636. The first control valve 661 and the second control valve 662 may be controlled by the control unit 500.

The present embodiment may further include an elastic body that provides an elastic force to the second piston 640 in the second direction so that the first piston 620 and the second piston 640 can be more smoothly moved in the second direction. The elastic body 670 may be a coil spring, as illustrated in FIGS. 1 through 3.

The first ejection flow passage 635 and the second ejection flow passage 636 may be connected to a liquefied gas fuel return flow passage 204 that is connected to the liquefied gas fuel tank 201. In this case, the liquefied gas fuel ejected via the first ejection flow passage 635 and the second ejection flow passage 636 may be returned to the liquefied gas fuel tank 201 via the liquefied gas fuel return flow passage 204.

Hereinafter, a method for supplying fuels of a bi-fuel engine by using the apparatus 1 for supplying fuels of the bi-fuel engine illustrated in FIG. 1 will be described below.

As illustrated in FIG. 1, in a state where the liquefied gas fuel supply flow passage 203 is open, as a liquefied gas fuel supply mode, the first control valve 661 closes the first ejection flow passage 635, and the second control valve 662 opens the second ejection flow passage 636.

In this case, the liquefied gas fuel supplied to the second space 632 is ejected via the second ejection flow passage 636 so that the pressure of the second space 632 is relatively lower than the pressure of the first space 631. Due to the relatively high pressure of the first space 631, the second piston 640 is moved in the first direction, i.e., to the left based on the drawings, and as the second piston 640 is moved, the first piston 620 is also moved in the first direction. Due to the movement of the first piston 620, the liquid fuel filled in the first chamber 610 is pressurized.

The liquid fuel pressurized by the pressurizing unit is supplied to the engine 901 via the fuel supply flow passage 101 when the control unit 500 controls the fuel selection valve 400 to open the liquid fuel supply flow passage 303, as illustrated in FIG. 2. In this case, since the pressure of the supplied liquid fuel is higher than the pressure of the liquefied gas fuel that remains in the fuel supply flow passage 101, the liquid fuel can be smoothly supplied to the engine 901 via the fuel supply flow passage 101.

When the liquid fuel supply mode is again converted into the liquefied gas fuel supply mode, the fuel selection valve 400 opens the liquefied gas fuel supply flow passage 203 and closes the liquid fuel supply flow passage 303. In this case, since the pressure of the liquefied gas fuel supplied to the liquefied gas fuel supply flow passage 203 is much higher than the pressure of the liquid fuel, even when the liquid fuel remains in the fuel supply flow passage 101, the liquefied gas fuel can be smoothly supplied to the engine 901 via the fuel supply flow passage 101.

If a liquid fuel supply preparation signal is applied to the control unit 500 in this state, as illustrated in FIG. 3, in a state where the liquid fuel supply flow passage 303 is closed, the liquid fuel is supplied to the liquid fuel supply flow passage 303 by control of the second pump 302. In this case, the first piston 620 is pressurized by the liquid fuel supplied. Simultaneously, if the first control valve 661 and the second control valve 662 are controlled to open the first ejection flow passage 635 and to close the second ejection flow passage 636, the pressure of the first space 631 is lower than the pressure of the second space 632 so that the second piston 640 can be moved in the second direction due to the pressure of the second space 632 added to the pressure of the liquid fuel. The second piston 640 can be more smoothly moved in the second direction while the elastic force generated by the elastic body 670 is applied to the second piston 640.

If the first piston 620 and the second piston 640 are moved in the second direction due to the action of this external force, the liquid fuel is filled in the first chamber 610, and preparation for pressurizing the filled liquid fuel is completed. If the operation of preparing to pressurize the liquid fuel is completed, the above-described procedure, i.e., opening the second ejection flow passage 636 and closing the first ejection flow passage 635 so as to induce first direction movement of the first piston 620 is performed such that the liquid fuel in the first chamber 610 is pressurized.

A configuration that is expressed as a 'flow passage' described above may be one having a space in which fuels can be transferred, such as a pipe or a hole through which a specific body that constitutes the apparatus 1 for supplying fuels passes, and the flow passage is not limited to a specific member or shape.

While the present invention has been particularly shown and described with reference to exemplary embodiments thereof, it will be understood by those of ordinary skill in the art that various changes in form and details may be made therein without departing from the scope of the present invention as defined by the following claims.

### INDUSTRIAL APPLICABILITY

According to the present invention, when a liquefied gas fuel supply mode is converted into a liquid fuel supply mode and a liquid fuel is supplied to an engine, a supply pressure of the liquid fuel is increased using a high pressure of a liquefied gas fuel supplied to a liquefied gas fuel supply flow passage so that the supply pressure of the liquid fuel can be increased without the need of disposing a pressure-raising device that requires additional power.

## Claims

1. An apparatus (1) for supplying fuels of a bi-fuel engine, the apparatus comprising:
a fuel supply flow passage (101) that is connected to an engine;
a liquefied gas fuel supply flow passage (203) that is connected to the fuel supply flow passage (101) and allows a liquefied gas fuel to be supplied from a liquefied gas fuel tank (201) to the fuel supply flow passage (101),
a liquid fuel supply flow passage (303) that is connected to the fuel supply flow passage (101) and allows a liquid fuel to be supplied from a liquid fuel tank (301) to the fuel supply flow passage (101);
a fuel selection valve (400) that allows the liquefied gas fuel supply flow passage (203) or the liquid fuel supply flow passage (303) to be selectively open;
a first chamber (610) which is connected to the liquid fuel supply flow passage (303) and in which the liquid fuel supplied to the liquid fuel supply flow passage (303) is stored; and
a pressurizing unit that operates so that a volume of an internal space of the first chamber (610) is reduced and that pressurizes the liquid fuel stored in the first chamber (610),
**characterized in that**
the pressurizing unit comprises a first piston (620) that is disposed to be able to make a reciprocal motion within the first chamber (610) and pressurizes the liquid fuel stored in the first chamber (610) as the first piston (620) is moved in a first direction of reciprocal motion directions, and a second piston (640) that is disposed to be able to make a reciprocal motion within a second chamber (630); is connected by a piston rod (650) to the first piston (629) and makes a reciprocal motion together with the first piston (620) as one body, and
**in that** the second piston (640) is moved in the first direction or makes a reciprocal motion due to a pressure of the liquefied gas fuel supplied from the liquefied gas fuel supply flow passage (303) into the second chamber (630).

2. The apparatus of claim 1, wherein a division flow passage (633) that is connected to the second chamber (630) from the liquefied gas fuel supply flow passage (203) is formed on the liquefied gas fuel supply flow passage (203), and the liquefied gas fuel supplied to the liquefied gas fuel supply flow passage (203) is supplied into the second chamber (630) Via the division flow passage (633).

3. The apparatus of claim 1, wherein an internal space of the second chamber (630) is partitioned by the second piston (640) into a first space and a second space, and a first division flow passage (633) that is connected to the first space from the liquefied gas fuel supply flow passage (203) and a second division flow passage (634) that is connected to the second space from the liquefied gas fuel supply flow passage (203) are formed on the liquefied gas fuel supply flow passage (203), and the liquefied gas fuel supplied to the liquefied gas fuel supply flow passage (203) is supplied to the first space and the second space via the first division flow passage (633) and the second division flow passage (634) and the second piston (640) makes a reciprocal motion within the second chamber due to a pressure difference between the first space and the second space.

4. The apparatus of claim 3, wherein a first ejection flow passage (635) that is connected to an outside from the first space so that the liquefied gas fuel supplied to the first space is ejected to the outside and a second ejection flow passage (636) that is connected to the outside from the second space so that the liquefied gas fuel supplied to the second space is ejected to the outside are formed on the second chamber (630), and the first ejection flow passage (635) is open or closed by a first control valve, and the second ejection flow passage (636) is open or closed by a second control valve, and a pressure difference between the first space and the second space occurs due to selective opening/closing the first ejection flow passage (635) or the second ejection flow passage (636),

5. The apparatus of claim 4, wherein the liquefied gas fuel ejected via the first rejection flow passage (635) and the second ejection flow passage (636) is returned to a liquefied gas fuel tank (201) via a liquefied gas fuel return flow passage.

6. The apparatus of claim 1, wherein a cross-section of the first chamber (610) is smaller than a cross-section of the second chamber (630).

7. The apparatus of claim 1, further comprising an elastic body that provides an elastic force to the second piston (640) in a second direction that is opposite to the first direction.

8. A method for supplying fuels of a bi-fuel engine by using the apparatus of claim 4, the method comprising:
(a) the fuel selection valve opening the liquefied gas fuel supply flow passage (203) and closing the liquid fuel supply flow passage (303) to supply a liquefied gas fuel to the fuel supply flow passage (101);
(b) supplying a liquid fuel to the liquid fuel supply flow passage (303), simultaneously opening the first ejection flow passage (635) and closing the second ejection flow passage (636) and allowing the second piston (640) to be moved in a second direction of reciprocal motion directions due to a pressure of the second space so that the liquid fuel is filled in the first chamber (610) ;
(c) closing the first ejection flow passage (635), opening the second ejection flow passage (636), and allowing the second piston (640) to be moved in the first direction due to a pressure of the first space so that the liquid fuel in the first chamber (610) is pressurized by the first piston (620), and
(d) the fuel selection valve closing the liquefied gas fuel supply flow passage (203) and opening the liquid fuel supply flow passage (303) to supply the liquid fuel to the fuel supply flow passage (101).

## Patentansprüche

1. Eine Vorrichtung (1) zum Zuführen von Kraftstoffen eines Zwei-Kraftstoff-Motors, wobei die Vorrichtung folgende Merkmale aufweist:
einen Kraftstoffzufuhr-Strömungsdurchlass (101), der mit einem Motor verbunden ist;
einen Flüssiggas-Kraftstoffzufuhr-Strömungsdurchlass (203), der mit dem Kraftstoffzufuhr-Strömungsdurchlass (101) verbunden ist und es ermöglicht, dass ein Flüssiggaskraftstoff von einem Flüssiggaskraftstofftank (201) dem Kraftstoffzufuhr-Strömungsdurchlass (101) zugeführt wird;
einen Flüssigkraftstoffzufuhr-Strömungsdurchlass (303), der mit dem Kraftstoffzufuhr-Strömungsdurchlass (101) verbunden ist und es ermöglicht, dass ein Flüssigkraftstoff von einem Flüssigkraftstofftank (301) dem Kraftstoffzufuhr-Strömungsdurchlass (101) zugeführt wird;
ein Kraftstoffauswahlventil (400), das es ermöglicht, dass der Flüssiggas-Kraftstoffzufuhr-Strömungsdurchlass (203) oder der Flüssigkraftstoffzufuhr-Strömungsdurchlass (303) selektiv offen ist;
eine erste Kammer (610), die mit dem Flüssigkraftstoffzufuhr-Strömungsdurchlass (303) verbunden ist und in welcher der Flüssigkraftstoff, der dem Flüssigkraftstoffzufuhr-Strömungsdurchlass (303) zugeführt wird, gespeichert ist; und
eine Druckbeaufschlagungseinheit, die dahingehend wirksam ist, dass ein Volumen eines Innenraums der ersten Kammer (610) reduziert wird, und die den Flüssigkraft-stoff, der in der ersten Kammer (610) gespeichert ist, mit Druck beaufschlagt;
**dadurch gekennzeichnet, dass**
die Druckbeaufschlagungseinheit einen ersten Kolben (620), der so angeordnet ist, dass er in der ersten Kammer (610) eine Hin- und Herbewegung durchführen kann, und den Flüssigkraftstoff, der in der ersten Kammer (610) gespeichert ist, mit Druck beaufschlagt, während der erste Kolben (620) in einer ersten Richtung von Hin- und Herbewegungs-Richtungen bewegt wird, und einen zweiten Kolben (640) aufweist, der so angeordnet ist, dass er in einer zweiten Kammer (630) eine Hin- und Herbewegung durchführen kann, durch eine Kolbenstange (650) mit dem ersten Kolben (620) verbunden ist und zusammen mit dem ersten Kolben (620) als ein einziger Körper eine Hin- und Herbewegung durchführt, und
dadurch, dass der zweite Kolben (640) aufgrund eines Drucks des Flüssiggaskraftstoffs, der von dem Flüssiggas-Kraftstoffzufuhr-Strömungsdurchlass (303) in die zweite Kammer (630) zugeführt wird, in der ersten Richtung bewegt wird oder eine Hin- und Herbewegung durchführt.

2. Die Vorrichtung gemäß Anspruch 1, bei der ein Teilungs-Strömungsdurchlass (633), der von dem Flüssiggas-Kraftstoffzufuhr-Strömungsdurchlass (203) mit der zweiten Kammer (630) verbunden ist, an dem Flüssiggas-Kraftstoffzufuhr-Strömungsdurchlass (203) gebildet ist und der Flüssiggaskraftstoff, der dem Flüssiggas-Kraftstoffzufuhr-Strömungsdurchlass (203) zugeführt wird, über den Teilungs-Strömungsdurchlass (633) in die zweite Kammer (630) zugeführt wird.

3. Die Vorrichtung gemäß Anspruch 1, bei der ein Innenraum der zweiten Kammer (630) durch den zweiten Kolben (640) in einen ersten Raum und einen zweiten Raum aufgeteilt ist und ein erster Teilungs-Strömungsdurchlass (633), der von dem Flüssiggas-Kraftstoffzufuhr-Strömungsdurchlass (203) mit dem ersten Raum verbunden ist, und ein zweiter Teilungs-Strömungsdurchlass (634), der von dem Flüssiggas-Kraftstoffzufuhr-Strömungsdurchlass (203) mit dem zweiten Raum verbunden ist, an dem Flüssiggas-Kraftstoffzufuhr-Strömungsdurchlass (203) gebildet sind und der Flüssiggaskraftstoff, der dem Flüssiggas-Kraftstoffzufuhr-Strömungsdurchlass (203) zugeführt wird, über den ersten Teilungs-Strömungsdurchlass (633) und den zweiten Teilungs-Strömungsdurchlass (634) dem ersten Raum und dem zweiten Raum zugeführt wird und der zweite Kolben (640) aufgrund eines Druckunterschieds zwischen dem ersten Raum und dem zweiten Raum in der zweiten Kammer eine Hin- und Herbewegung durchführt.

4. Die Vorrichtung gemäß Anspruch 3, bei der ein erster Ausstoß-Strömungsdurchlass (635), der von dem ersten Raum mit einem Äußeren verbunden ist, so dass der Flüssiggaskraftstoff, der dem ersten Raum zugeführt wird, zu dem Äußeren ausgestoßen wird, und ein zweiter Ausstoß-Strömungsdurchlass (636), der von dem zweiten Raum mit dem Äußeren verbunden ist, so dass der Flüssiggaskraftstoff, der dem zweiten Raum zugeführt wird, zu dem Äußeren ausgestoßen wird, an der zweiten Kammer (630) gebildet sind und der erste Ausstoß-Strömungsdurchlass (635) durch ein erstes Steuerventil geöffnet oder geschlossen ist und der zweite Ausstoß-Strömungsdurchlass (636) durch ein zweites Steuerventil geöffnet oder geschlossen ist und aufgrund des selektiven Öffnens/Schließens des ersten Ausstoß-Strömungsdurchlasses (635) oder des zweiten Ausstoß-Strömungsdurchlasses (636) ein Druckunterschied zwischen dem ersten Raum und dem zweiten Raum auftritt.

5. Die Vorrichtung gemäß Anspruch 4, bei der der Flüssiggaskraftstoff, der über den ersten Ausstoß-Strömungsdurchlass (635) und den zweiten Ausstoß-Strömungsdurchlass (636) ausgestoßen wird, über einen Flüssiggas-Kraftstoffrückfuhr-Strömungsdurchlass zu einem Flüssiggaskraftstofftank (201) zurückgeführt wird.

6. Die Vorrichtung gemäß Anspruch 1, bei der ein Querschnitt der ersten Kammer (610) kleiner als ein Querschnitt der zweiten Kammer (630) ist.

7. Die Vorrichtung gemäß Anspruch 1, die ferner einen elastischen Körper aufweist, der dem zweiten Kolben (640) in einer zweiten Richtung, die entgegengesetzt zu der ersten Richtung ist, eine elastische Kraft bereitstellt.

8. Ein Verfahren zum Zuführen von Kraftstoffen eines Zwei-Kraftstoff-Motors durch Verwenden der Vorrichtung gemäß Anspruch 4, wobei das Verfahren folgende Schritte aufweist:
(a) Öffnen des Flüssiggas-Kraftstoffzufuhr-Strömungsdurchlasses (203) und Schließen des Flüssigkraftstoffzufuhr-Strömungsdurchlasses (303) durch das Kraftstoffauswahlventil, um dem Kraftstoffzufuhr-Strömungsdurchlass (101) einen Flüssiggaskraftstoff zuzuführen;
(b) Zuführen eines Flüssigkraftstoffs zu dem Flüssigkraftstoffzufuhr-Strömungsdurchlass (303) bei gleichzeitigem Öffnen des ersten Ausstoß-Strömungsdurchlasses (635) und Schließen des zweiten Ausstoß-Strömungsdurchlasses (636) und Ermöglichen, dass der zweite Kolben (640) aufgrund eines Drucks des zweiten Raums in einer zweiten Richtung von Hin- und Herbewegungs-Richtungen bewegt wird, so dass der Flüssigkraftstoff in die erste Kammer (610) gefüllt wird;
(c) Schließen des ersten Ausstoß-Strömungsdurchlasses (635), Öffnen des zweiten Ausstoß-Strömungsdurchlasses (636) und Ermöglichen, dass der zweite Kolben (640) aufgrund eines Drucks des ersten Raums in der ersten Richtung bewegt wird, so dass der Flüssigkraftstoff in der ersten Kammer (610) durch den ersten Kolben (620) mit Druck beaufschlagt wird; und
(d) Schließen des Flüssiggas-Kraftstoffzufuhr-Strömungsdurchlasses (203) und Öffnen des Flüssigkraftstoffzufuhr-Strömungsdurchlasses (303) durch das Kraftstoffauswahlventil, um dem Kraftstoffzufuhr-Strömungsdurchlass (101) den Flüssigkraftstoff zuzuführen.

## Revendications

1. Appareil (1) d'alimentation en carburant d'un moteur mixte, l'appareil comprenant:
un passage de flux d'alimentation de carburant (101) qui est connecté à un moteur;
un passage de flux d'alimentation de gaz liquéfié (203) qui est connecté au passage de flux d'alimentation de carburant (101) et permet d'alimenter un carburant gazeux liquéfié d'un réservoir de gaz liquéfié (201) vers le passage de flux d'alimentation de carburant (101),
un passage flux d'alimentation de carburant liquide (303) qui est connecté au passage de flux d'alimentation de carburant (101) et permet d'alimenter un carburant liquide d'un réservoir de carburant liquide (301) vers le passage de flux d'alimentation de carburant (101);
une soupape de sélection de carburant (400) qui permet que le passage de flux d'alimentation de gaz liquéfié (203) ou le passage de flux d'alimentation de carburant liquide (303) est sélectivement ouvert;
une première chambre (610) qui est connectée au passage de flux d'alimentation de carburant liquide (303) et dans laquelle est entreposé le carburant liquide alimenté vers le passage de flux d'alimentation de carburant liquide (303); et
une unité de pressurisation qui fonctionne de sorte qu'un volume d'un espace intérieur de la première chambre (610) soit réduit et qui pressurise le carburant liquide entreposé dans la première chambre (610);
**caractérisé par le fait que**
l'unité de pressurisation comprend un premier piston (620) qui est disposé de manière à pouvoir effectuer un mouvement de va-et-vient à l'intérieur de la première chambre (610) et qui pressurise le carburant liquide entreposé dans la première chambre (610) au fur et à mesure que le premier piston (620) est déplacé dans une première direction des directions de déplacement en va-et-vient, et un deuxième piston (640) qui est disposé de manière à pouvoir effectuer un mouvement de va-et-vient à l'intérieur d'une deuxième chambre (630), est connecté par une tige de piston (650) au premier piston (620) et effectue un mouvement de va-et-vient ensemble avec le premier piston (620) comme un seul corps, et
que le deuxième piston (640) est déplacé dans la première direction ou effectue un mouvement de va-et-vient du fait d'une pression du carburant gazeux liquéfié alimenté du passage de flux d'alimentation de gaz liquéfié (303) vers la deuxième chambre (630).

2. Appareil selon la revendication 1, dans lequel un passage de flux de division (633) qui est connecté à la deuxième chambre (630) depuis le passage de flux d'alimentation de gaz liquéfié (203) est formé sur le passage de flux d'alimentation de gaz liquéfié (203), et le carburant gazeux liquéfié alimenté vers le passage de flux d'alimentation de gaz liquéfié (203) est alimenté vers la deuxième chambre (630) à travers le passage de flux de division (633).

3. Appareil selon la revendication 1, dans lequel un espace intérieur de la deuxième chambre (630) est divisé par le deuxième piston (640) en un premier espace et un deuxième espace, et un premier passage de flux de division (633) qui est connecté au premier espace depuis le passage de flux d'alimentation de gaz liquéfié (203) et un deuxième passage de flux de division (634) qui est connecté au deuxième espace depuis le passage de flux d'alimentation de gaz liquéfié (203) sont formés sur le passage de flux d'alimentation de gaz liquéfié (203); et le carburant gazeux liquéfié alimenté vers le passage de flux d'alimentation de carburant gazeux liquéfié (203) est alimenté vers le premier espace et le deuxième espace à travers le premier passage de flux de division (633) et le deuxième passage de flux de division (634) ; et le deuxième piston (640) effectue un mouvement de va-et-vient à l'intérieur de la deuxième chambre du fait d'une différence de pression entre le premier espace et le deuxième espace.

4. Appareil selon la revendication 3, dans lequel un premier passage de flux d'éjection (635) qui est connecté à l'extérieur depuis le premier espace de sorte que le carburant gazeux liquéfié alimenté vers le premier espace soit éjecté vers l'extérieur et un deuxième passage de flux d'éjection (636) qui est connecté à l'extérieur depuis le deuxième espace de sorte que le carburant gazeux liquéfié alimenté vers le deuxième espace soit éjecté vers l'extérieur sont formés sur la deuxième chambre (630), et le premier passage de flux d'éjection (635) est ouvert ou fermé par une première soupape de commande, et le deuxième passage de flux d'éjection (636) est ouvert ou fermé par une deuxième soupape de commande, et une différence de pression entre le premier espace et le deuxième espace se produit du fait de l'ouverture/fermeture sélective du premier passage de flux d'éjection (635) ou du deuxième passage de flux d'éjection (636).

5. Appareil selon la revendication 4, dans lequel le carburant gazeux liquéfié éjecté à travers le premier passage de flux d'éjection (635) et le deuxième passage de flux d'éjection (636) est retourné vers un réservoir de gaz liquéfié (201) à travers un passage de flux de retour de carburant gazeux liquéfié.

6. Appareil selon la revendication 1, dans lequel une section de la première chambre (610) est plus petite qu'une section de la deuxième chambre (630).

7. Appareil selon la revendication 1, comprenant par ailleurs un corps élastique qui fournit une force élastique au deuxième piston (640) dans une deuxième direction qui est opposée à la première direction.

8. Procédé pour alimenter en carburants un moteur mixte à l'aide de l'appareil selon la revendication 4, le procédé comprenant le fait de:
(a) la soupape de sélection de carburant ouvrant le passage de flux d'alimentation de carburant gazeux liquéfié (203) et fermant le passage de flux d'alimentation de carburant liquide (303) pour alimenter un carburant gazeux liquéfié vers le passage de flux d'alimentation de carburant (101);
(b) alimenter un carburant liquide vers le passage de flux d'alimentation de carburant liquide (303), simultanément ouvrir le premier passage de flux d'éjection (635) et fermer le deuxième passage de flux d'éjection (636) et permettre que le deuxième piston (640) soit déplacé dans une deuxième direction des directions de déplacement en va-et-vient du fait d'une pression du deuxième espace de sorte que le carburant liquide soit rempli dans la première chambre (610);
(c) fermer le premier passage de flux d'éjection (635), ouvrir le deuxième passage de flux d'éjection (636), et permettre que le deuxième piston (640) soit déplacé dans la première direction du fait d'une pression du premier espace de sorte que le carburant liquide dans la première chambre (610) soit pressurisé par le premier piston (620), et
(d) la soupape de sélection de carburant fermant le passage de flux d'alimentation de gaz liquéfié (203) et ouvrant le passage de flux d'alimentation de carburant liquide (303) pour alimenter le carburant liquide vers le passage de flux d'alimentation de carburant (101).
